# EUROPEAN PATENT SPECIFICATION

(11) **EP 1 539 889 B1**
(45) Date of publication and mention of the grant of the patent: **20.02.2008**
(21) Application number: 03761199.3
(22) Date of filing: 20.06.2003
(51) Int. Cl.: C09D 5/44

(54) **ELECTRODEPOSITION BATHS CONTAINING METAL SALTS AND METHODS RELATED THERETO**
ELEKTROTAUCHBÄDER MIT METALLSALZEN SOWIE ENTSPRECHENDE VERFAHREN
BAINS D'ELECTRODEPOSITION CONTENANT DES SELS DE METAUX ET PROCEDES CORRESPONDANTS

(30) Priority: 21.06.2002 US 390601 P
(43) Date of publication of application: 15.06.2005
(73) Proprietor: PPG Industries Ohio, Inc., Cleveland, OH 44111 (US)
(72) Inventor: RAKIEWICZ, Edward, W., Gibsonia, PA 15044 (US); KARABIN, Richard, F., Ruffs Dale, PA 15679 (US); ZAWACKY, Steven, R., Pittsburgh, PA 15237 (US); BOYD, Donald, W., Cheswick, PA 15024 (US); KAYLO, Alan, J., Glenshaw, PA 15116 (US)
(74) Representative: Polypatent
(86) International application number: PCT/US2003/019540
(87) International publication number: WO 2004/000955

(56) References cited:
- EP-A- 0 644 244
- EP-A- 1 125 989
- US-A- 5 501 779
- US-A- 6 083 373
- US-B1- 6 190 525

## Description

### FIELD OF THE INVENTION

The present invention relates to improved electrodeposition baths containing a resinous phase dispersed in an aqueous medium, the resinous phase comprised of an ionic electrodepositable resin, a curing agent therefor, and a metal compound present in a sufficient amount to provide soluble metal ion in a specified amount; and to their use in the method of electrodeposition.

### BACKGROUND OF THE INVENTION

Electrodeposition as a coating application method involves deposition of a film-forming composition onto a conductive substrate under the influence of an applied electrical potential. Electrodeposition has become increasingly important in the coatings industry because, by comparison with non-electrophoretic coating means, electrodeposition offers increased paint utilization, improved corrosion protection and low environmental contamination.

Initially, electrodeposition was conducted with the workpiece being coated serving as the anode. This was familiarly referred to as anionic electrodeposition. However, in 1972, cationic electrodeposition was introduced commercially. Since that time, cationic electrodeposition has steadily gained in popularity and today is by far the most prevalent method of electrodeposition. Throughout the world, more than 80 percent of all motor vehicles produced are given a primer coating by cationic electrodeposition.

Typically, electrodepositable coatings comprise an electrodepositable film-forming polymer and a curing agent, in combination with, *inter alia,* pigments. Lead-containing pigments such as lead silica chromate, basic lead silicate, lead chromate, and lead sulfate are often used in electrodepositable coatings because they impart excellent corrosion resistance to the electrocoated article. However, the acid used in cationic electrodeposition baths often solubilizes a portion of the lead pigment forming lead salts which are soluble in the aqueous phase of the electrodeposition bath. These lead salts often find their way into the ultrafiltrate of the bath, thus necessitating the removal and subsequent disposal of metallic lead and/or ionic or organic lead-containing materials.

In recent years, due to environmental concerns, particularly in Europe and Japan, the use of lead-free coatings has been mandated. Although surface coatings of excellent quality can be achieved by means of cationic electrodeposition of lead-free coatings, the removal of corrosion inhibitive lead pigments can result in poor corrosion resistance of these coatings, as well as poor appearance properties. In some cases the poor appearance properties can be attributed to differences in film thickness of the cured electrodepositable coating from one area of the coated substrate to the other. Inconsistencies in the pretreatment layer on a substrate is frequently the cause of such variations in electrodeposited film thicknesses. These inconsistencies can occur by mechanical or chemical means, such as through scratches or in areas where caustic or acidic pretreatment components have dripped on to a substrate surface. Electrodeposited coatings applied over such substrates can exhibit noticeable differences in film build between these regions, a phenomenon frequently referred to as "substrate mapping". When topcoats are subsequently applied to such electrocoated substrates, these differences in film thickness of the electrodeposition coating can telegraph through the topcoats, thereby creating an undesirable topcoat appearance. This phenomenon is also commonly referred to as "mapping".

In view of the foregoing, it would be advantageous to provide an electrodeposition bath, particularly a lead-free electrodeposition bath, which provides excellent corrosion resistance without exhibiting the appearance deficiencies caused by "mapping".

### SUMMARY OF THE INVENTION

In accordance with the present invention, a lead-free electrodeposition bath, having improved corrosion resistance, comprising a resinous phase dispersed in an aqueous medium is provided. The resinous phase comprises the following components:
(a) an active hydrogen-containing ionic electrodepositable resin, and
(b) a curing agent having functional groups reactive with the active hydrogens of (a). The improvement comprises the inclusion in the electrodeposition bath of a metal compound derived from a metal selected from magnesium, strontium, barium, and mixtures thereof present in an amount from 1 to 10,000 parts per million of total metal and not more than 1,000 parts per million soluble metal, based on electrodeposition bath weight.

Also provided is a method of electrocoating a conductive substrate serving as a charged electrode in an electrical circuit comprising the electrode and an oppositely charged counter electrode which are immersed in an aqueous electrodeposition bath described above.

### DETAILED DESCRIPTION OF THE INVENTION

Generally, the electrodeposition bath of the present invention comprises a resinous phase dispersed in an aqueous medium wherein the resinous phase comprises the following components:
(a) an active hydrogen containing ionic electrodepositable resin, and
(b) a curing agent having functional groups reactive with the active hydrogens of (a), wherein the improvement comprises an electrodeposition bath, preferably an electrodeposition bath which is essentially free of lead compounds, containing at least one metal compound derived from a metal selected from magnesium, strontium, barium, and mixtures thereof.

The metal compound is present in an amount ranging from 1 to 10,000 parts per million, preferably not more than 5,000 parts per million, and more preferably not more than 1,000 parts per million, of total metal provided that not more than 1,000 parts per million, preferably between 5 and 750 parts per million, more preferably between 5 and 500 parts per million, and even more preferably between 5 and 100 parts per million is in the form soluble metal, based on electrodeposition bath weight.

Typically, at levels lower than 1 part per million total metal, based on electrodeposition bath weight, no appreciable improvement In mapping of the electrocoated substrate is observed. At levels of higher than 1,000 parts per million soluble metal, based on electrodeposition bath weight, appearance of the electrocoated substrate can be compromised due to surface roughness. Paint stability can be adversely affected as well.

By "total metal" is meant the total amount of non-dissociated metal, present in the form of soluble and/or insoluble metal compounds. By "soluble metal" is meant metal ion, typically a rare earth metal ion, that is, for example Ba²⁺ or Sr²⁺, resulting from the dissociation of the metal compound in the aqueous electrodeposition bath. By "soluble metal compound" is meant a metal compound, capable of substantially complete dissociation in aqueous media, and by "insoluble metal compound" is meant a metal compound, capable of only partial dissociation in aqueous media.

Examples of soluble metal compounds suitable for use in the electrodeposition bath of the present invention include, *inter alia,* organic and inorganic barium salts such as barium nitrate, barium formate, strontium nitrate, strontium formate, and barium acetate. In an embodiment of the present invention, barium and strontium salts comprise the soluble metal compounds. Examples of insoluble metal compounds suitable for use in the electrodeposition baths of the present invention include, *inter alia,* organic and inorganic metal salts such as barium sulfate, barium carbonate, barium oxide, barium hydroxide, and barium phosphate. In one embodiment, barium sulfate comprises the insoluble metal compound. The metal can also be present in the form of a metal-containing pigment, for example, strontium chromate, and barium meta silicate.

Likewise, a variety of additional metal compounds may be advantageous for minimizing "mapping". For example, the inclusion in electrodeposition coating compositions of compounds derived from Group I and II metals such as cesium and calcium, and transition metals such as lanthanum, cerium, praseodymium, neodymium, samarium, europium, gadolinium, terbium, dysprosium, holmium, erbium, ytterbium, lutetium, yttrium, titanium, zirconium, hafnium, vanadium, manganese, zinc, antimony, nickel, tungsten, and bismuth either alone or in any combination, or in combination with one or more of the compounds discussed above may minimize or eliminate altogether topcoat appearance problems resulting from "mapping".

The amount of soluble metal present in the improved electrodepositable coating composition of the present invention can vary widely dependent on the electrodepositable composition itself, the type of substrate to which it will be applied, as well as application conditions, provided that a sufficient amount of soluble metal is present in the electrodepositable coating composition to provide a continuous coating of uniform film thickness upon application. That is, the film thickness of the cured electrodepositable coating composition should not vary from one area of the electrocoated substrate to another by more that 20%, preferably 10%.

Besides the aforementioned metal compounds and pigments, the electrodeposition baths of the present invention also contain, as a main film-forming polymer, an active hydrogen-containing ionic, preferably cationic, electrodepositable resin. A wide variety of electrodepositable film-forming polymers are known and can be used in the electrodeposition baths of the invention so long as the polymers are "water dispersible," i.e., adapted to be solubilized, dispersed or emulsified in water. The water dispersible polymer is ionic in nature, that is, the polymer will contain anionic functional groups to impart a negative charge or, as is preferred, cationic functional groups to impart a positive charge.

Examples of film-forming resins suitable for use in anionic electrodeposition bath compositions are base-solubilized, carboxylic acid containing polymers such as the reaction product or adduct of a drying oil or semi-drying fatty acid ester with a dicarboxylic acid or anhydride; and the reaction product of a fatty acid ester, unsaturated acid or anhydride and any additional unsaturated modifying materials which are further reacted with polyol. Also suitable are the at least partially neutralized interpolymers of hydroxy-alkyl esters of unsaturated carboxylic acids, unsaturated carboxylic acid and at least one other ethylenically unsaturated monomer. Still another suitable electrodepositable resin comprises an alkyd-aminoplast vehicle, i.e., a vehicle containing an alkyd resin and an amine-aldehyde resin. Yet another anionic electrodepositable resin composition comprises mixed esters of a resinous polyol. These compositions are described in detail in U.S. Pat. No. 3,749,657 at col. 9, lines 1 to 75 and col. 10, lines 1 to 13, all of which are herein incorporated by reference. Other acid functional polymers can also be used such as phosphatized polyepoxide or phosphatized acrylic polymers as are well known to those skilled in the art.

As aforementioned, it is preferred that the active hydrogen-containing ionic electrodepositable resin (a) is cationic, that is, comprises cationic salt groups and is capable of deposition on a cathode. Examples of such cationic film-forming resins include amine salt group-containing resins such as the acid-solubilized reaction products of polyepoxides and primary or secondary amines such as those described in U.S. Pat. Nos. 3,663,389; 3,984,299; 3,947,338; and 3,947,339. Usually, these amine salt group-containing resins are used in combination with a blocked isocyanate curing agent. The isocyanate can be fully blocked as described in the aforementioned U.S. Pat. No. 3,984,299 or the isocyanate can be partially blocked and reacted with the resin backbone such as described in U.S. Pat. No. 3,947,338. Also, one-component compositions as described in U.S. Pat. No. 4,134,866 and DE-OS No. 2,707,405 can be used as the film-forming resin. Besides the epoxy-amine reaction products, film-forming resins can also be selected from cationic acrylic resins such as those described in U.S. Pat. Nos. 3,455,806 and 3,928,157.

Besides amine salt group-containing resins, quaternary ammonium salt group-containing resins can also be employed. Examples of these resins are those which are formed from reacting an organic polyepoxide with a tertiary amine salt. Such resins are described in U.S. Pat. Nos. 3,962,165; 3,975,346; and 4,001,101. Examples of other cationic resins are ternary sulfonium salt group-
containing resins and quaternary phosphonium salt-group containing resins such as those described in U.S. Pat. Nos. 3,793,278 and 3,984,922, respectively. Also, film-forming resins which cure via transesterification such as described in European Application No. 12463 can be used. Further, cationic compositions prepared from Mannich bases such as described in U.S. Pat. No. 4,134,932 can be used.

The resins to which the present invention is particularly effective are those positively charged resins which contain primary and/or secondary amine groups. Such resins are described in U.S. Pat. Nos. 3,663,389; 3,947,339; and 4,116,900. In U.S. Pat. No. 3,947,339, a polyketimine derivative of a polyamine such as diethylenetriamine or triethylenetetraamine is reacted with a polyepoxide. When the reaction product is neutralized with acid and dispersed in water, free primary amine groups are generated. Also, equivalent products are formed when polyepoxide is reacted with excess polyamines such as diethylenetriamine and triethylenetetraamine and the excess polyamine vacuum stripped from the reaction mixture. Such products are described in U.S. Pat. Nos. 3,663,389 and 4,116,900.

The active hydrogen-containing ionic electrodepositable resin described above is present in the electrodeposition bath of the invention in amounts of 1 to 60 percent by weight, preferably 5 to 25 based on total weight of the electrodeposition bath.

The resinous phase of the electrodeposition bath of the present invention further comprises (b) a curing agent adapted to react with the active hydrogens of the ionic electrodepositable resin (a) described immediately above. Both blocked organic polyisocyanate and aminoplast curing agents are suitable for use in the present invention, although blocked isocyanates are preferred herein for cathodic electrodeposition.

Aminoplast resins, which are the preferred curing agent for anionic electrodeposition, are the condensation products of amines or amides with aldehydes. Examples of suitable amines or amides are melamine, benzoguanamine, urea and similar compounds. Generally, the aldehyde employed is formaldehyde, although products can be made from other aldehydes such as acetaldehyde and furfural. The condensation products contain methylol groups or similar alkylol groups depending on the particular aldehyde employed. Preferably, these methylol groups are etherified by reaction with an alcohol. Various alcohols employed include monohydric alcohols containing from 1 to 4 carbon atoms such as methanol, ethanol, isopropanol, and n-butanol, with methanol being preferred. Aminoplast resins are commercially available from American Cyanamid Co. under the trademark CYMEL and from Monsanto Chemical Co. under the trademark RESIMENE.

The aminoplast curing agents are typically utilized in conjunction with the active hydrogen containing anionic electrodepositable resin in amounts ranging from 5 percent to 60 percent by weight, preferably from 20 percent to 40 percent by weight, the percentages based on the total weight of the resin solids in the electrodeposition bath.

The preferred curing agents for use in cathodic electrode position are blocked organic polyisocyanates. The polyisocyanates can be fully blocked as described in U. S. Patent No. 3,984,299 column 1 lines 1 to 68, column 2 and column 3 lines 1 to 15, or partially blocked and reacted with the polymer backbone as described in U. S. Patent No. 3,947,338 column 2 lines 65 to 68, column 3 and column 4 lines 1 to 30, which are incorporated by reference herein. By "blocked" is meant that the isocyanate groups have been reacted with a compound so that the resultant blocked isocyanate group is stable to active hydrogens at ambient temperature but reactive with active hydrogens in the film forming polymer at elevated temperatures usually between 90°C and 200°C.

Suitable polyisocyanates include aromatic and aliphatic polyisocyanates, including cycloaliphatic polyisocyanates and representative examples include diphenylmethane-4,4'-diisocyanate (MDI), 2,4- or 2,6-toluene diisocyanate (TDI), including mixtures thereof, p-phenylene diisocyanate, tetramethylene and hexamethylene diisocyanates, dicyclohexylmethane-4,4'-diisocyanate, isophorone diisocyanate, mixtures of phenylmethane-4,4'-diisocyanate and polymethylene polyphenylisocyanate. Higher polyisocyanates such as triisocyanates can be used. An example would include triphenylmethane-4,4',4"-triisocyanate. Isocyanate prepolymers with polyols such as neopentyl glycol and trimethylolpropane and with polymeric polyols such as polycaprolactone diols and triols (NCO/OH equivalent ratio greater than 1) can also be used.

The polyisocyanate curing agents are typically utilized in conjunction with the active hydrogen- containing cationic electrodepositable resin in amounts ranging from about 5 percent to about 60 percent by weight, preferably from about 20 percent to about 50 percent by weight, the percentages based on the total weight of the resin solids of the electrodeposition bath.

In a particular embodiment, the composition of the present invention further comprises a bismuth compound. The bismuth compound may be soluble or insoluble in water. Examples of suitable bismuth compounds include bismuth oxide, bismuth hydroxide, organo-bismuth complexes such as bismuth methylmercaptothiodiazole, bismuth aminocaproic acid, bismuth acetoacetonate, and bismuth thiocarbamate, and acid salts of bismuth such as bismuth acetate, bismuth lactate, bismuth dimethylolpropionate, bismuth methanesulfonate, bismuth methoxyacetate, and bismuth sulfamate. The bismuth compound can be incorporated into the electrodeposition bath in a variety of ways. In the case of a water-insoluble bismuth compound, the bismuth compound may be added as a component in the pigment paste, that is ground with the other pigments with the grind vehicle as described below. Alternatively, the insoluble bismuth compound may be mixed and ground in an aqueous medium, optionally in the presence of an acid, then added either to the clear resin feed (as described below) or to the pigment paste, or directly to the finished electrodeposition bath itself. A water-soluble bismuth compound may be incorporated by dissolving in any of the aqueous components of the electrodeposition bath, or in the finished electrodeposition bath itself.

The aqueous compositions of the present invention are in the form of an aqueous dispersion. The term "dispersion" is believed to be a two-phase transparent, translucent or opaque resinous system in which the resin is in the dispersed phase and the water is in the continuous phase. The average particle size of the resinous phase is generally less than 1.0 and usually less than 0.5 microns, preferably less than 0.15 micron.

The concentration of the resinous phase in the aqueous medium is at least 1 and usually from 2 to 60 percent by weight based on total weight of the aqueous dispersion. When the compositions of the present invention are in the form of resin concentrates, they generally have a resin solids content of 20 to 60 percent by weight based on weight of the aqueous dispersion.

Electrodeposition baths of the invention are typically supplied as two components: (1) a clear resin feed, which includes generally the active hydrogen-containing ionic electrodepositable resin, i.e., the main film-forming polymer, the curing agent, and any additional water-dispersible, non-pigmented components; and (2) a pigment paste, which generally includes one or more pigments, a water-dispersible grind resin which can be the same or different from the main-film forming polymer, and, optionally, additives such as wetting or dispersing aids. Electrodeposition bath components (1) and (2) are dispersed in an aqueous medium which comprises water and, usually, coalescing solvents.

It should be appreciated that there are various methods by which the metal compound can be incorporated into the electrodeposition bath. The soluble metal compound may be added "neat," that is, added directly to the bath without prior blending or reacting with other components, or it can be dissolved in an aqueous medium prior to direct addition to the bath. Alternatively, the soluble metal compound or an aqueous solution thereof can be added to the predispersed clear resin feed which may include the ionic resin, the curing agent and/or any other non-pigmented component. In a particular embodiment of the present invention, the soluble metal compound, for example barium nitrate and/or strontium nitrate, is pre-dissolved in an aqueous medium and added "neat" to the electrodeposition bath. The insoluble metal compound and/or metal pigments, on the other hand, typically are pre-blended with the pigment paste component prior to the incorporation of the paste to the electrodeposition bath.

The electrodeposition bath of the present invention has a resin solids content usually within the range of 5 to 25 percent by weight based on total weight of the electrodeposition bath.

As aforementioned, besides water, the aqueous medium may contain a coalescing solvent. Useful coalescing solvents include hydrocarbons, alcohols, esters, ethers and ketones. The preferred coalescing solvents include alcohols, polyols and ketones. Specific coalescing solvents include isopropanol, butanol, 2-ethylhexanol, isophorone, 2-methoxypentanone, ethylene and propylene glycol and the monoethyl, monobutyl and monohexyl ethers of ethylene glycol. The amount of coalescing solvent is generally between 0.01 and 25 percent and when used, preferably from 0.05 to 5 percent by weight based on total weight of the aqueous medium.

As discussed above, a pigment composition and, if desired, various additives such as surfactants, wetting agents or catalyst can be included in the dispersion. The pigment composition may be of the conventional type comprising pigments, for example, iron oxides, carbon black, titanium dioxide, talc, aluminum silicate, and silica, as well as conventional color pigments such as cadmium yellow, cadmium red, chromium yellow and the like. The pigment content of the dispersion is usually expressed as a pigment-to-resin ratio. In the practice of the invention, when pigment is employed, the pigment-to-resin ratio is usually within the range of 0.02 to 1:1. The other additives mentioned above are usually in the dispersion in amounts of 0.01 to 3 percent by weight based on weight of resin solids.

The electrodepositable coating compositions of the present invention can be applied by electrodeposition to a variety of electroconductive substrates especially metals such as untreated steel, galvanized (zinc coated) steel, pre-phosphated electrogalvanized steel, electrogalvanized steel, stainless steel, pickled steel, zinc-iron alloys such as GALVANNEAL, GALVALUME and GALFAN zinc-aluminum alloys, aluminum, copper, magnesium and conductive carbon coated materials, and combinations thereof. The applied voltage for electrodeposition may be varied and can be, for example, as low as 1 volt to as high as several thousand volts, but typically between 50 and 500 volts. The current density is usually between 0.5 ampere and 5 amperes per square foot and tends to decrease during electrodeposition indicating the formation of an insulating film.

After the coating has been applied by electrodeposition, it is cured usually by baking at elevated temperatures such as 90° to 260°C. for 1 to 40 minutes.

Illustrating the invention are the following examples which, however, are not to be considered as limiting the invention to their details. All parts and percentages in the following examples as well as throughout the specification are by weight unless otherwise indicated.

### EXAMPLES

### EXAMPLE A

This example describes the preparation of an electrodeposition bath used to prepare the electrodeposition bath compositions of the present invention. The electrodeposition bath was prepared from the following ingredients.

| INGREDIENTS | PARTS BY WEIGHT |
|---|---|
| Resin blend E6300¹ | 1966.7 |
| Pigment paste of Example D | 264.3 |
| Deionized water | 1569 |

| | |
|---|---|
| ¹A resin blend available from PPG Industries, Inc.. | |

The bath was prepared by adding 300 parts of the deionized water to the resin blend E6300 under agitation. The pigment paste was reduced with 300 parts of the deionized water with agitation, and then blended into the reduced resin mixture under agitation. The remainder of the deionized water was then added under agitation. Final bath solids were about 22.5%, with a pigment to resin ratio of 0.14:1.0. The paint was allowed to agitate two hours. Twenty percent of the total paint weight was removed by ultrafiltration and replaced with deionized water.

### EXAMPLE B

This example describes the preparation of an electrodeposition bath of the present invention comprising barium metal in the form of barium hydroxide. The electrodeposition bath was prepared from a mixture of the following ingredients.

| INGREDIENTS | PARTS BY WEIGHT |
|---|---|
| Electrodeposition bath of Example A | 3800 |
| Barium hydroxide¹ | 0.0474 |

| | |
|---|---|
| ¹Anhydrous barium hydroxide commercially available from Aldrich Chemical Company, Inc. | |

The bath was made by removing 760 parts of permeate from the electrodeposition bath of Example A via ultrafiltration and adding the anhydrous barium hydroxide to the permeate. The dilute solution was then added back to the ultrafiltered bath. The bath thus formed was allowed to agitate for fifteen minutes, yielding an electrodeposition bath having a theoretical barium level of 10ppm.

### EXAMPLE C

This example describes the preparation of a catalyst paste used in the preparation of the electrodeposition baths of Examples A and B.

| INGREDIENTS | PARTS BY WEIGHT |
|---|---|
| Cationic grind resin¹ | 554.5 |
| n-butoxypropanol | 21.2 |
| FASCAT 4201² | 253.1 |
| Yttrium oxide³ | 36.2 |
| Deionized water | 135 |

| | |
|---|---|
| ¹As described in Example C of US 6,190,525. ²FASCAT 4201 is commercially available from Atofina Chemicals. ³Yttrium oxide, 99.9%, available from Pacific Industrial Development Corporation. | |

The catalyst paste was prepared by sequentially adding the above ingredients under high shear agitation. After the ingredients were thoroughly blended, the pigment paste was transferred to a vertical sand mill and ground to a Hegman value of about 7.25. The measured solids were 50% following 1 hour at 110°C.

### EXAMPLE D

This example describes the preparation of a pigment paste suitable for use in the electrodeposition bath of Example A. The pigment paste was prepared from a mixture of the following ingredients:

| INGREDIENTS | PARTS BY WEIGHT |
|---|---|
| Cationic grind resin¹ | 291.4 |
| SURFYNOL GA² | 9.7 |
| E6243³ | 7.4 |
| n-Butoxypropanol | 7.8 |
| Ethylene Glycol Monohexyl Ether | 7.8 |
| Catalyst Paste of Example C | 238.2 |
| TRONOX CR-800E⁴ | 242.4 |
| PRINTEX 200⁵ | 4.8 |
| ASP-200⁶ | 105.4 |
| Deionized water | 85.1 |

| | |
|---|---|
| ¹As described in Example C of US 6,190,525. ²Nonionic surfactant available from Air Products and Chemicals, Inc. ³Dilute lactic acid solution available from PPG Industries, Inc. ⁴Titanium dioxide pigment available from Kerr-McGee Corporation. ⁵Carbon black pigment available from Degussa Corporation. ⁶Aluminum silicate available from Engelhard Corporation. | |

The above ingredients were added sequentially under high shear agitation. After the ingredients were thoroughly blended, the pigment paste was transferred to a vertical sand mill and ground to a Hegman value of about 7.25. The measured solids were 55.6% following 1 hour at 110°C.

### COMPARATIVE EXAMPLE E

This comparative example describes the preparation of a conventional electrodeposition bath.

| INGREDIENTS | PARTS BY WEIGHT |
|---|---|
| Resin blend¹ | 840 |
| Pigment paste² | 212 |
| Deionized water | 938.3 |
| Acetic acid, 25% | 9.7 |

| | |
|---|---|
| ¹A resin blend available from PPG Industries, Inc. as W780IC. ²A pigment paste available from PPG Industries, Inc. as P9736. | |

The bath was prepared by adding 200 parts of the deionized water to the resin blend under agitation. The pigment paste was reduced with 200 parts of the deionized water with agitation, and then blended into the reduced resin mixture under agitation. The remainder of the deionized water was then added under agitation. Final bath solids were about 20%, with a pigment to resin ratio of 0.18:1.0. The paint was allowed to agitate two hours. The bath pH was adjusted to 5.5 using 25% acetic acid.

### EXAMPLE F

This example describes the preparation of an electrodeposition bath containing strontium in accordance with the present invention. The bath was prepared from the following ingredients.

| INGREDIENTS | PARTS BY WEIGHT |
|---|---|
| Electrodeposition bath of Example E | 1834.8 |
| Strontium acetate¹ | 0.2434 |
| Deionized water | 50 |

| | |
|---|---|
| ¹Strontium acetate commercially available from Aldrich Chemical Company, Inc. | |

The bath was prepared by first adding the strontium acetate to 50 parts of deionized water. The dilute solution of strontium acetate was then added to the electrodeposition bath of Comparative Example E. The bath was allowed to agitate for fifteen minutes. The theoretical level of strontium was 55ppm.

### TESTING PROCEDURE:

Phosphated panels, commercially available from ACT Laboratories, included cold rolled steel, electrogalvanized, and galvaneal substrates. The phosphate pretreatment, commercially available from PPG Industries, Inc., was CHEMFOS 700 with deionized water rinse. Each panel was sanded on one-half of each side using 400-grit sandpaper, leaving the other half intact. The sanding was from top to bottom of each panel, completely removing the phosphate layer and exposing the base metal. A Fischer Permascope, model M11, was then standardized for each substrate on the sanded and unsanded areas.

### ELECTROCOATING PROCEDURE:

The electrocoat paint compositions were electrodeposited onto the half-sanded test panels. The conditions for cationic electrodeposition used for Comparative Example A and Example B were 2 minutes at 92°F at 170 and 220 volts DC. The coated substrate was cured in an electric oven at 340°F for 25 minutes. The film build was then measured on each panel on the sanded and unsanded area using a Fischer Permascope, model M11. The film build differential, defined here as the difference in film build between the sanded and unsanded areas of the substrate, is listed in Table 1 for each substrate using the electrodeposition baths of Comparative Example A and Example B.

**Table 1**

| Substrate | Voltage | Film build differential (mils) | |
|---|---|---|---|
| | | Comparative Example A | Example B |
| Cold Rolled Steel | 170 | 0.32 | 0.04 |
| Cold Rolled Steel | 220 | 0.46 | 0.02 |
| Electrogalvanize d | 170 | 0.26 | 0.08 |
| Electrogalvanize d | 220 | 0.51 | 0.13 |
| Galvaneal | 170 | 0.38 | 0.02 |
| Galvaneal | 220 | 0.50 | 0.10 |

The conditions for cationic electrodeposition used for Comparative Example E and Example F were 3 minutes at 90°F at 170 volts DC. The coated substrates were cured in an electric oven at 350°F for 30 minutes. Again, the film build was measured on each panel on the sanded and unsanded area using a Fischer Permascope, model M11. The film build differential, defined above, for the sanded vs. unsanded area of each substrate for Examples E (Comparative) and F is listed in Table 2 below.

**Table 2**

| Substrate | Film build differential (mils) | |
|---|---|---|
| | Comparative Example E | Example F |
| Electrogalvanized | 0.32 | 0.15 |
| Galvaneal | 0.33 | 0.11 |

The data presented above in Tables 1 and 2 illustrate that the electrodeposited film builds related to pretreatment inconsistencies (i.e. substrate mapping) can be minimized using the electrodeposition bath composition of the present invention.

It will be appreciated by those skilled in the art that changes could be made to the embodiments described above without departing from the broad inventive concept thereof. It is understood, therefore, that this invention is not limited to the particular embodiments disclosed, but it is intended to cover modifications which are within the spirit and scope of the invention, as defined by the appended claims.

## Claims

1. An electrodeposition bath, said electrodeposition bath comprising a resinous phase dispersed in an aqueous medium, said resinous phase comprising:
(a) an active hydrogen-containing ionic electrodepositable resin, and
(b) a curing agent having functional groups reactive with the active hydrogens of (a), and
(c) at least one metal compound derived from a metal selected from magnesium, strontium, barium, and mixtures thereof, said compound being present in an amount ranging from 1 part per million to 10,000 parts per million of total metal provided that not more than about 1000 parts per million is in the form of soluble metal, based on electrodeposition bath weight.

2. The electrodeposition bath of claim 1, wherein said bath is essentially free of lead compounds.

3. The electrodeposition bath of claim 1, wherein the amount of soluble metal present ranges between 5 and 750 parts per million based on electrodeposition bath weight.

4. The electrodeposition bath of claim 1 wherein the amount of soluble metal present ranges between 5 and 500 parts per million, preferably between 5 and 100 parts per million based on electrodeposition bath weight.

5. The electrodeposition bath of claim 1 wherein the amount of total metal is not more than 5,000 parts per million, based on electrodeposition bath weight.

6. The electrodeposition bath of claim 1 wherein the amount of total metal is not more than 1,000 parts per million, based on electrodeposition bath weight.

7. The electrodeposition bath of claim 1 wherein said resinous phase further comprises at least one non-lead pigment.

8. The electrodeposition bath of claim 1, wherein said metal compound comprises a barium salt, a strontium salt and mixtures thereof.

9. The electrodeposition bath of claim 1 wherein said metal compound comprises one or more barium salts.

10. The electrodeposition bath of claim 6 wherein said metal compound comprises barium nitrate.

11. The electrodeposition bath of claim 1, wherein said metal compound comprises one or more strontium salts.

12. The electrodeposition bath of claim 1 wherein said active hydrogen containing ionic resin comprises cationic salt groups.

13. The electrodeposition bath of claim 1 wherein the amount of soluble metal present ranges between 5 and 100 parts per million soluble metal based on electrodeposition bath weight.

14. The electrodeposition bath of claim 1 wherein the soluble metal comprises barium which is present in an amount ranging from 5 to 100 parts per million soluble barium based on electrodeposition bath weight.

15. The electrodeposition bath of claim 1, further comprising a bismuth compound.

16. A method of electrocoating a conductive substrate serving as a charged electrode in an electrical circuit comprising said electrode and an oppositely charged counter electrode, said electrodes being immersed in an aqueous electrocoating composition according to any of claims 1-15, comprising passing electric current between said electrodes to cause deposition of the electrocoating composition on the substrate as a substantially continuous film.

17. The method of claim 16 wherein the substrate serves as a cathode.

18. The method of claim 16 wherein said substrate is comprised of untreated steel.

19. The method of claim 16 wherein said substrate is comprised of galvanized steel.

20. The method of claim 16 wherein said substrate is comprised of aluminum.

21. The method of claim 16 wherein said substrate is comprised of a galvanneal substrate.

22. The method of claim 16 wherein said substrate is comprised of a pre-phosphated electrogalvanized steel substrate.

## Patentansprüche

1. Elektrotauchbad, wobei dieses Elektrotauchbad eine Harzphase dispergiert in einem wässrigen Medium enthält, wobei diese Harzphase enthält:
(a) ein ionisches elektrophoretisch abscheidbares Harz, das aktiven Wasserstoff enthält, und
(b) ein Härtungsmittel mit funktionellen Gruppen, die reaktiv mit den aktiven Wasserstoffen von (a) sind, und
(c) wenigstens eine Metallverbindung, die sich von einem Metall, ausgewählt aus Magnesium, Strontium, Barium und Mischungen davon, ableitet, wobei diese Verbindung in einem Mengenbereich von 1 Teil pro Million bis 10.000 Teile pro Million an Gesamtmetall vorhanden ist, unter der Voraussetzung, dass nicht mehr als etwa 1.000 Teile pro Million in Form von löslichem Metall vorliegen, bezogen auf das Gewicht des Elektrotauchbades.

2. Elektrotauchbad nach Anspruch 1, wobei das Bad im Wesentlichen frei von Bleiverbindungen ist.

3. Elektrotauchbad nach Anspruch 1, wobei die Menge an vorhandenem löslichen Metal im Bereich zwischen 5 und 750 Teilen pro Million, bezogen auf das Gewicht des Elektrotauchbads, liegt.

4. Elektrotauchbad nach Anspruch 1, wobei die Menge an vorhandenem löslichen Metal im Bereich zwischen 5 und 500 Teilen pro Million, vorzugsweise zwischen 5 und 100 Teilen pro Million, bezogen auf das Gewicht des Elektrotauchbads, liegt.

5. Elektrotauchbad nach Anspruch 1, wobei die Menge an Gesamtmetall nicht mehr als 5.000 Teile pro Million, bezogen auf das Gewicht des Elektrotauchbads, beträgt.

6. Elektrotauchbad nach Anspruch 1, wobei die Menge an Gesamtmetall nicht mehr als 1.000 Teile pro Million, bezogen auf das Gewicht des Elektrotauchbads, beträgt.

7. Elektrotauchbad nach Anspruch 1, wobei diese Harzphase zusätzlich wenigstens ein Nicht-Bleipigment enthält.

8. Elektrotauchbad nach Anspruch 1, wobei diese Metallverbindung ein Bariumsalz, ein Strontiumsalz oder Mischungen davon enthält.

9. Elektrotauchbad nach Anspruch 1, wobei diese Metallverbindung ein oder mehrere Bariumsalze enthält.

10. Elektrotauchbad nach Anspruch 6, wobei diese Metallverbindung Bariumnitrat enthält.

11. Elektrotauchbad nach Anspruch 1, wobei diese Metallverbindung ein oder mehrere Strontiumsalze enthält.

12. Elektrotauchbad nach Anspruch 1, wobei dieses aktiven Wasserstoff enthaltende ionische Harz kationische Salzgruppen enthält.

13. Elektrotauchbad nach Anspruch 1, wobei die Menge an löslichem Metall im Bereich zwischen 5 und 100 Teilen pro Million lösliches Metall, bezogen auf das Gewicht des Elektrotauchbads, liegt.

14. Elektrotauchbad nach Anspruch 1, wobei das lösliche Metall Barium enthält, das in einer Menge im Bereich von 5 bis 100 Teilen pro Million lösliches Barium, bezogen auf das Gewicht des Elektrotauchbads, vorhanden ist.

15. Elektrotauchbad nach Anspruch 1, das zusätzlich eine Bismuthverbindung enthält.

16. Verfahren zur elektrophoretischen Beschichtung eines leitfähigen Substrats, das als geladene Elektrode in einem elektrischen Stromkreis dient, der diese Elektrode und eine entgegengesetzt geladene Gegenelektrode aufweist, wobei diese Elektroden in eine wässrige Elektrotauchbeschichtungszusammensetzung gemäß einem der Ansprüche 1-15 eingetaucht sind, umfassend Durchleiten eines elektrischen Stroms zwischen diesen Elektroden, um die Abscheidung der Elektrotauchbeschichtungszusammensetzung auf dem Substrat als einen im Wesentlichen kontinuierlichen Film zu bewirken.

17. Verfahren nach Anspruch 16, wobei das Substrat als Kathode dient.

18. Verfahren nach Anspruch 16, wobei dieses Substrat nicht behandelten Stahl umfasst.

19. Verfahren nach Anspruch 16, wobei dieses Substrat nicht galvanisierten Stahl umfasst.

20. Verfahren nach Anspruch 16, wobei dieses Substrat Aluminium umfasst.

21. Verfahren nach Anspruch 16, wobei dieses Substrat ein Galvanneal-Substrat umfasst.

22. Verfahren nach Anspruch 16, wobei dieses Substrat ein vorphosphatiertes elektrogalvanisiertes Stahlsubstrat umfasst.

## Revendications

1. Bain d'électrodéposition, ledit bain d'électrodéposition comprenant une phase résineuse dispersée dans un milieu aqueux, ladite phase résineuse comprenant :
(a) une résine ionique pouvant être déposée par voie électrolytique contenant des atomes d'hydrogène actif, et
(b) un agent de durcissement comportant des groupes fonctionnels réagissant avec les atomes d'hydrogène actif de (a), et
(c) au moins un composé métallique dérivé d'un métal choisi parmi le magnésium, le strontium, le baryum et des mélanges de ceux-ci, ledit composé étant présent en une quantité allant de 1 partie par million à 10 000 parties par million du métal total sous réserve que pas plus d'environ 1 000 parties par million soient sous la forme de métal solide, sur la base du poids du bain d'électrodéposition.

2. Bain d'électrodéposition selon la revendication 1, dans lequel ledit bain est sensiblement exempt de composés à base de plomb.

3. Bain d'électrodéposition selon la revendication 1, dans lequel la quantité de métal soluble présent se trouve comprise entre 5 et 750 parties par million sur la base du poids du bain d'électrodéposition.

4. Bain d'électrodéposition selon la revendication 1, dans lequel la quantité de métal soluble présent se trouve comprise entre 5 et 500 parties par million, de préférence entre 5 et 100 parties par million sur la base du poids du bain d'électrodéposition.

5. Bain d'électrodéposition selon la revendication 1, dans lequel la quantité de métal total n'est pas supérieure à 5 000 parties par million, sur la base du poids du bain d'électrodéposition.

6. Bain d'électrodéposition selon la revendication 1, dans lequel la quantité de métal total n'est pas supérieure à 1 000 parties par million, sur la base du poids du bain d'électrodéposition.

7. Bain d'électrodéposition selon la revendication 1, dans lequel ladite phase résineuse comprend en outre au moins un pigment sans plomb.

8. Bain d'électrodéposition selon la revendication 1, dans lequel ledit composé métallique comprend un sel de baryum, un sel de strontium et des mélanges de ceux-ci.

9. Bain d'électrodéposition selon la revendication 1, dans lequel ledit composé métallique comprend un ou plusieurs sels de baryum.

10. Bain d'électrodéposition selon la revendication 6, dans lequel ledit composé métallique comprend du nitrate de baryum.

11. Bain d'électrodéposition selon la revendication 1, dans lequel ledit composé métallique comprend un ou plusieurs sels de strontium.

12. Bain d'électrodéposition selon la revendication 1, dans lequel ladite résine ionique contenant de l'hydrogène actif comprend des groupes de sels cationiques.

13. Bain d'électrodéposition selon la revendication 1, dans lequel la quantité du métal soluble présent se trouve comprise entre 5 et 100 parties par million de métal soluble sur la base du poids du bain d'électrodéposition.

14. Bain d'électrodéposition selon la revendication 1, dans lequel le métal soluble comprend du baryum qui est présent en une quantité allant de 5 à 100 parties par million de baryum soluble sur la base du poids du bain d'électrodéposition.

15. Bain d'électrodéposition selon la revendication 1, comprenant en outre un composé à base de bismuth.

16. Procédé de revêtement électrolytique d'un substrat conducteur servant d'électrode chargée dans un circuit électrique comprenant ladite électrode et une électrode auxiliaire de charge opposée, lesdites électrodes étant immergées dans une composition aqueuse de revêtement électrolytique selon l'une quelconque des revendications 1 à 15, comprenant le passage d'un courant électrique entre lesdites électrodes pour entraîner le dépôt de la composition de revêtement électrolytique sur le substrat sous forme d'un film sensiblement continu.

17. Procédé selon la revendication 16, dans lequel le substrat sert de cathode.

18. Procédé selon la revendication 16, dans lequel ledit substrat est composé d'acier non traité.

19. Procédé selon la revendication 16, dans lequel ledit substrat est composé d'acier galvanisé.

20. Procédé selon la revendication 16, dans lequel ledit substrat est composé d'aluminium.

21. Procédé selon la revendication 16, dans lequel ledit substrat est composé d'un substrat à base de galvanneal.

22. Procédé selon la revendication 16, dans lequel ledit substrat est composé d'un substrat en acier électrogalvanisé traité préalablement au phosphate.
